# EUROPEAN PATENT APPLICATION

(11) **EP 3 109 490 A1**
(43) Date of publication of application: **28.12.2016**
(21) Application number: 15174167.5
(22) Date of filing: 26.06.2015
(51) Int. Cl.: F16B 13/08

(54) **ANCHOR ASSEMBLY**

(71) Applicant: Black & Decker, Inc., Newark, DE 19711 (US)
(72) Inventor: Pregartner, Thilo, 65510 Idstein (DE); Ameiser, Alexander, 65510 Idstein (DE)
(74) Representative: SBD IPAdmin

(57) **Abstract**

An anchor assembly for location in a hole in a cracked concrete substrate. The anchor assembly comprises a main body having a rear portion defining a rear end, a front portion defining a front end towards which the front portion tapers, and a longitudinal axis extending between the rear and front ends. At least one cutting member is provided on the front portion proximal to the front end. There is also provided a bore extending through the main body so as to define openings in the front and rear ends, the bore having a generally tapered front section within the front portion of the main body. At least one axial slit extends at least partway along the front portion from the front end. An expansion plug is sized to pass through the opening in the rear end and to move along the bore, the expansion plug being configured to cause outward deformation of the front portion of the main body as it passes through the front section of the bore.

## Description

The present invention concerns anchors, particularly those used for securing items to concrete substrates.

Concrete structures are typically formed from concrete substrates, being either the type made off site (commonly known as pre-cast concrete substrates) or the type made on site (commonly known as cast in place concrete substrates). Both types of concrete substrates may be reinforced with metal of other suitable materials depending on their intended application. It is often necessary to attach fixtures and fittings to concrete substrates, the nature of which might vary according to the type of structure. For instance, many buildings have floors or walls made from concrete panels from which ducts or other items may be suspended, bridges may include concrete portions from which signage and other items must be hung, and so on. This often requires an anchor to be secured to the concrete substrate such that the fixtures and fittings can be mechanically fastened to the anchor. The anchors of interest here are those which are retrofitted to the concrete substrate after production and probably after installation, rather than those which are installed during production of the substrate. This typically involves drilling a hole into the concrete substrate, inserting the anchor into the hole, deforming the anchor so that it grips the concrete substrate, and then securing the fixture to the anchor by use of a bolt or like fastener.

During the life of the structure, the concrete may experience tensile forces, which may lead to cracks propagating in areas of the substrate subject to high stress concentration. Concrete which experiences tensile forces is known as cracked concrete due to the inevitability of crack propagation. It is well known that stress concentration is greatest in the area immediately surrounding a hole and it is therefore common for cracks to propagate around the pre-drilled holes occupied by the anchors. The cracks inevitably cause the hole to expand and the anchor may then become loose, which has potentially catastrophic consequences.

Some anchors, namely cracked concrete anchors, are designed for use with cracked concrete and can therefore tolerate some degree of expansion within the hole before they become noticeably loose. Although cracked concrete anchors must successfully undergo rigorous testing to qualify as such, some cracked concrete anchors inevitably have greater holding strengths than others.

It is therefore an object of the present invention to provide a cracked concrete anchor which has superior holding strength over known cracked concrete anchors.

According to the present invention, there is provided an anchor assembly for location in a hole in a cracked concrete substrate, the anchor assembly comprising:
a main body having:
   a rear portion defining a rear end;
   a front portion defining a front end towards which the front portion tapers;
   a longitudinal axis extending between the rear and front ends;
   a bore extending through the main body so as to define openings in the front and rear ends, the bore having a generally tapered front section within the front portion of the main body; and
   at least one axial slit extending at least partway along the front portion from the front end; and
   an expansion plug sized to pass through the opening in the rear end for movement along the bore, the expansion plug being configured to cause outward deformation of the front portion of the main body as it passes through the front section of the bore, characterized in that at least one cutting member is provided on the front portion proximal to the front end.

In a preferred arrangement the cutting member defines a cutting edge, which may lie in a plain arranged substantially normal to the axis of the anchor body. Alternatively, there may be a plurality of cutting edges lying in multiple plains. Advantageously, the cutting member may have front and rear faces which converge to define the cutting edge. The cutting edge may take various forms suitable for biting into a portion of the substrate defining the pre-drilled hole. Alternatively or additionally, the cutting member may include cutting points. Generally the radius of the cutting member should increase in proportion to the embedment depth, which is defined by the distance between the front and rear ends of the main body. An increased radius here will allow for greater penetration into the substrate, but achieving that penetration will inevitably require more force in urging the plug through the bore.

In one embodiment of the invention, the at least one axial slit has a closed end defined by an enlarged aperture. The aperture may be circular with a width or diameter possibly at least twice as large as the width of the slit and most preferably thrice as large. Each pair of neighbouring slits defines a segment of the front portion and each segment is deformable to enable the cutting edges to bite into the surrounding substrate. The greatest stress concentration is likely to occur at the closed ends of the slits so the enlarged heads serve to relieve stress in those areas and thus promote deformation. The slits are likely to extend along the entirety of the front portion and therefore the enlarged apertures may be arranged on the interface between the front and rear portions of the main body. The anchor body may include between three and eight slits, and most preferably four slits, which may be equally spaced or irregularly spaced. Advantageously, the radius of the cutting member should increase proportionately with the number of slits as this will ensure that enough of the cutting member penetrates the substrate. Put differently, a greater number of slits results in a greater number of cutting members collectively occupying a smaller portion of the circumference; this reduced circumferential presence may be compensated by an increased radial presence.

Advantageously, the anchor body may be furnished with a supporting flange, which may be arranged to extend at least partway around the rear end and to project beyond the rear portion. The supporting flange may be stepped or flared outwardly to create the projection beyond the rear portion. The anchor body may be installed inside a pre-drilled hole having a diameter only slightly larger than that of the rear portion and the supporting flange may restrict further movement of the anchor body into that hole. The opening of the hole in the substrate may be countersunk as a natural consequence of the drilling process or the installation of the anchor body. In some instances the length of the main body may be substantially equal to the depth of the hole such that the front end of the main body bears against the base of the hole and further displacement of the anchor body is thus prevented. That arrangement therefore obviates the need for the support flange.

Preferably the front section of the bore has a first part distal from the front end and tapering at a first angle relative to the axis of the main body, and a second part proximal to the front end and tapering at a second angle relative to the axis of the main body, the first angle possibly being greater than the second angle. Advantageously, the first and second parts may each have angles between 0 and 10 degrees and preferably between 0 and 5 degrees relative to the longitudinal axis of the body. In one arrangement, the second part may have a taper angle of 0 degrees. The angles and diameters of the first and second parts are critical in determining the energy required to achieve the desired expansion.

The second part may have a length relative to the longitudinal axis which is between 5% and 50% of the combined lengths of the first and second parts.

The plug has front and rear ends and may taper at an angle between 0 and 5 degrees towards the front end. The front end has a diameter which may be substantially equal to the diameter of the bore at the interface between the first and second parts.

In a preferred arrangement, the anchor and the plug may be configured to cause a region of the front portion proximal to the cutting member to engage the surface of the substrate inside the drill hole at the point of maximum deformation. This engagement has two effects: firstly it may limit degradation of a region of the substrate adjacent the region of penetration; and secondly, the engagement may create a frictional force which contributes towards the holding strength of the anchor. To achieve this, the anchor and the plug may be configured to define an expansion diameter which is greater than the diameter of the drill hole and or the rear portion of the main body, the expansion diameter being defined by the sum of: (i) the diameter of the small front end of the plug; and (ii) the diameter of the front portion of the main body proximal the front end.

The rear section of the bore may be threaded for various reasons. One reason may be to enable a setting tool to wind onto the bore and to urge the expansion plug further therealong. Another reason may be to enable fittings to be bolted to the anchor body following installation.

By way of example only, one embodiment of the present invention will now be described in detail with reference being made to the accompanying figures, in which:
**Figure 1** is a perspective view of the anchor assembly according to the present invention;
**Figure 2** is a side view of the anchor assembly of Figure 1 with the expansion plug arranged for insertion into a bore formed in the main body;
**Figure 3** is a cross-sectional side view of the anchor assembly shown in Figures 1 and 2, but with the expansion plug arranged within a rear portion of the bore;
**Figure 4** is a cross-sectional side view of the anchor assembly shown in Figures 1 to 3 located within a hole formed within a substrate, the expansion plug makes a light contact with the bore without causing deformation of the front portion;
**Figure 5** corresponds to Figure 4, but shows the expansion plug being urged towards a front section of the bore so as to cause partial deformation of the front portion of the main body; and
**Figure 6** corresponds to Figures 4 and 5, but shows the expansion plug in the front section of the bore so as to cause full deformation of the front portion of the main body.

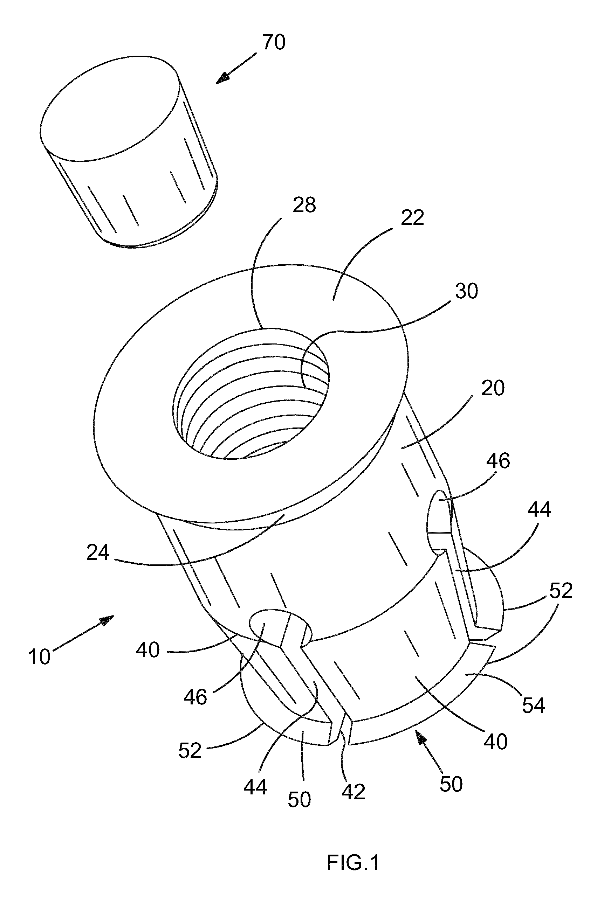

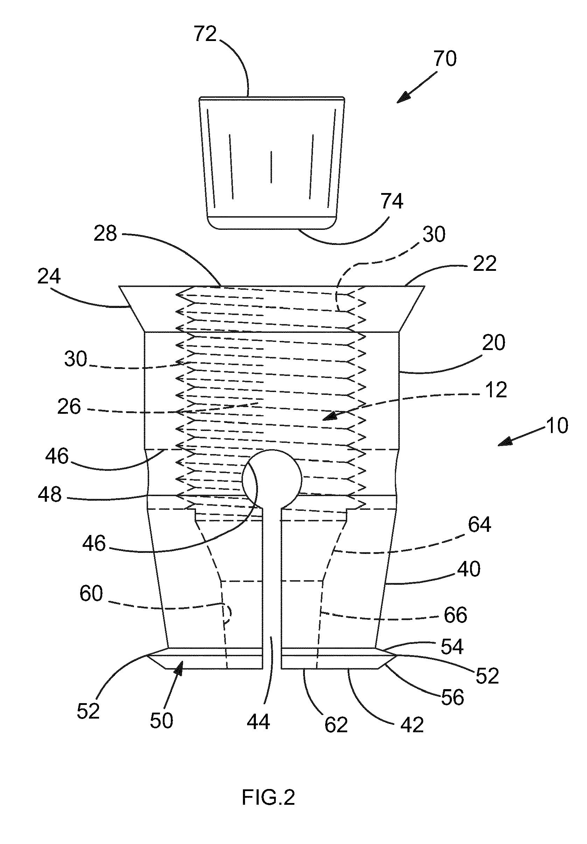

Referring initially to Figures 1 and 2, there is provided an anchor body, generally indicated 10, and an expansion plug, generally indicated 70, the anchor body 10 being configured to receive the expansion plug 70. The anchor body 10 is generally tubular insofar as it includes a bore generally indicated 12 extending axially therethrough. The anchor body may be made from a hardened metal such as cold-formable carbon steel. The anchor body 10 has a rear portion 20 defining a rear end 22 and a front portion 40 defining a front end 42. The rear portion 20 is generally cylindrical, though it tapers outwardly towards the rear end 22 to define an annular support flange 24. A rear section 26 of the bore 12 passes through the rear portion 20 of the anchor body 10 and is accessed by a rear opening 28 formed in the rear end 22. The rear section is formed with an internal thread 30 suitable for receiving the shaft of a setting tool (not shown), for example.

The front portion 40 of the anchor body 10 is generally frusto-conical so as to taper inwardly towards the front end 42. Four slits 44 are spaced equally around the front portion, each slit extending axially along the front portion 40 so as to commence at the front end 42 and terminate in a stress relief hole 46 disposed at the interface 48 between the front and rear portions 40,20. Each stress relief hole 46 is generally circular and has a diameter approximately three times greater than the width of its respective slit. In fact, the slits 44 divide the front portion 40 into four segments which collectively are frusto-conical.

The front portion 40 is furnished with four cutting flanges 50 disposed adjacent the front end 42 and separated by the four slits 44. Each cutting flange 50 defines a cutting edge 52 arranged in the same plane as the cutting edges 52 of the other cutting flanges 50. Furthermore, each cutting flange 50 includes a rearward face 54 and a forward face 56 which converge to define the cutting edge 52.

The bore 12 includes a front section 60 which extends through the front portion 40 of the anchor body 10 and defines a front opening 62 in the front end 42. The front section 60 includes a first part 64 which extends from the rear section 26 and tapers at a first angle relative to the axis of the anchor body 10, and a second part 66 which extends from the first part 64 and tapers at a second angle relative to the axis of the anchor body 10.

The expansion plug 70 is a frusto-conical wedge having a circular rear face 72 and a circular front face 74, the rear face being slightly larger than the front face. The expansion plug is made of metal and is reasonably hard to resist deformation.

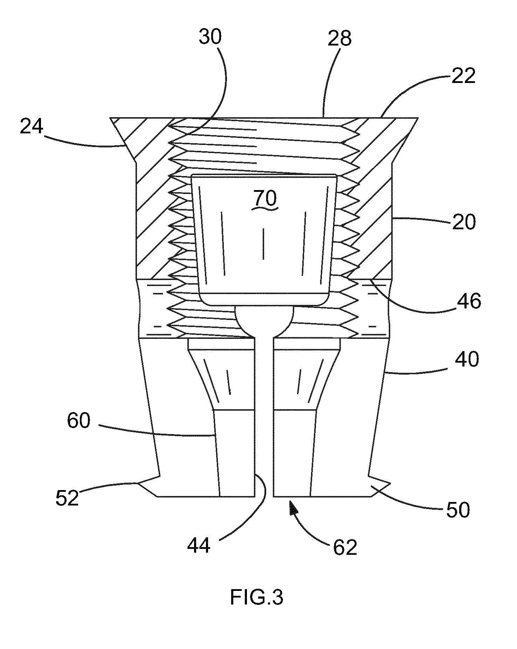

Referring now to Figures 3 to 5, cross-sections of the anchor body are shown during sequential steps of its installation. Figure 3 shows the anchor body 12 prior to installation. The expansion plug 70 is received in the rear section 26 of the bore 12, having been inserted through the rear opening 28 in the rear end 22. The expansion plug is arranged in the rear section 26 of the bore 12 such that the direction of its taper corresponds to the direction of the taper of the front section.

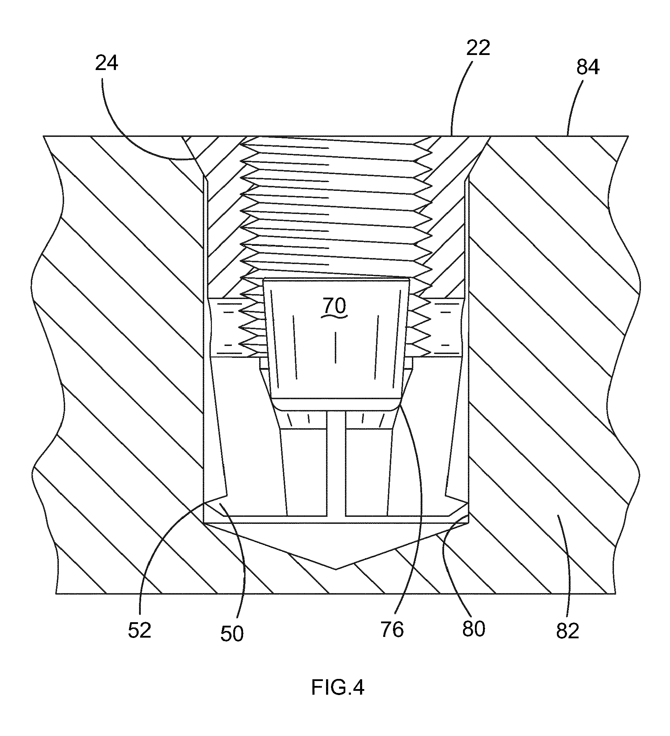

Figure 4 shows the anchor body 10 located inside a pre-drilled hole 80 of a concrete substrate 82. The diameter of the rear portion 20 is slightly smaller than the diameter of the pre-drilled hole 80, while the diameter of the support flange 24 is larger than the diameter of the pre-drilled hole 80. This causes the support flange 24 to chip some of the concrete away while the anchor body is urged to its installed position, which may require several strikes with a hammer (not shown). The support flange 24 prevents the anchor body 10 from slipping further into the pre-drilled hole 80. Once the anchor body 10 is in its installed position, its rear end 22 is substantially flush with an upper surface 84 of the substrate 82. The expansion plug 70 rests in the bore 12 such that its front circumferential edge 76 bears against the first part 64.

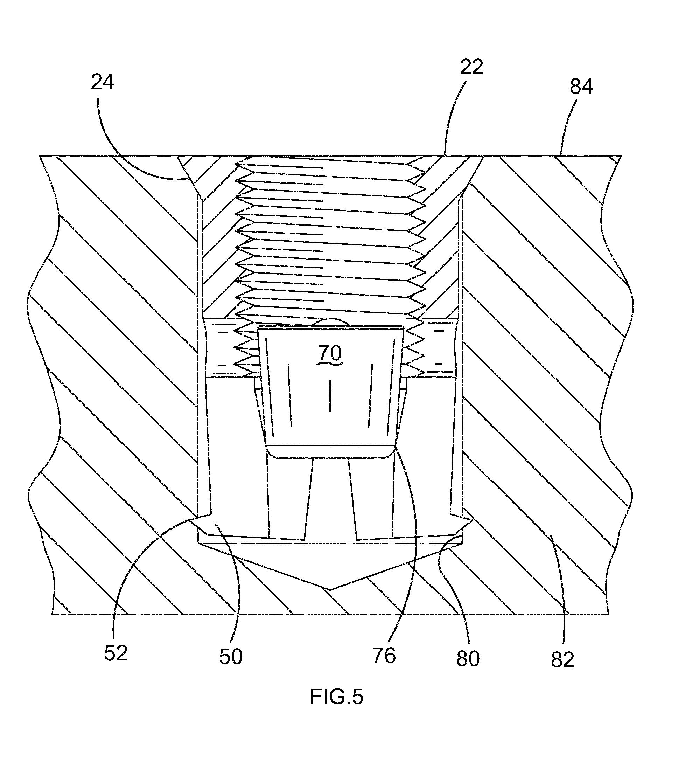

Referring now to Figure 5, the expansion plug 70 is urged further along the front section 60 of the bore 12 such that the front circumferential edge 76 of the expansion plug 70 eventually rides along the second part 66. This starts to cause significant deformation of the front portion 40 such that each of the segments move outwardly. As this happens, the cutting edges of the cutting flanges begin to bite into the wall.

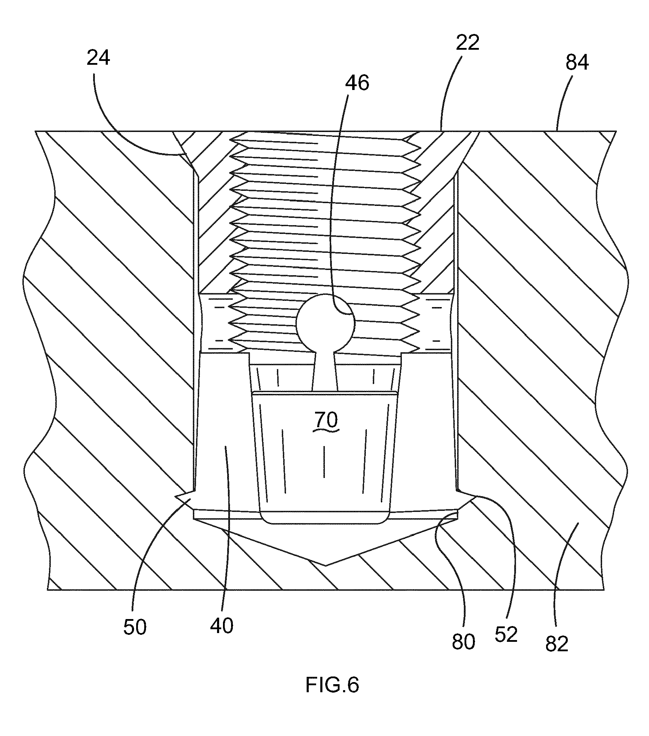

Referring now to Figure 6, the expansion plug has been forced further along the bore 12 towards its home position at which the circular front face 74 locates slightly beyond the front end 42 of the front portion 40. The expansion plug may be driven to that position by a setting tool (not shown) which winds onto the internal thread 30 and bears against the circular rear face 72, though the expansion plug may also be driven to that position by a setting tool (such as a punch not shown) which may be presented to the expansion plug and struck with a hammer. In the home position, the front portion 40 is deformed to the extent that it is substantially cylindrical and the entire cutting flange locates inside the substrate. In this position the width of the slits 44 are increased significantly, particularly the portions distal to the stress relief holes 46.

In addition, a small region of the front portion 40, immediately rearward of the cutting member, abuts the substrate 82 defining the hole 80. This abutment contributes to the holding strength of the anchor body while also minimising degradation of the substrate in that area.

## Claims

1. An anchor assembly for location in a hole in a cracked concrete substrate, the anchor assembly comprising:
a main body having:
a rear portion defining a rear end;
a front portion defining a front end towards which the front portion tapers;
a longitudinal axis extending between the rear and front ends;
a bore extending through the main body so as to define openings in the front and rear ends, the bore having a generally tapered front section within the front portion of the main body; and
at least one axial slit extending at least partway along the front portion from the front end; and
an expansion plug sized to pass through the opening in the rear end and to move along the bore, the expansion plug being configured to cause outward deformation of the front portion of the main body as it passes through the front section of the bore, **characterized in that** at least one cutting member is provided on the front portion proximal to the front end.

2. The anchor assembly as claimed in claim 1, wherein the cutting member defines a cutting edge.

3. The anchor assembly as claimed in claim 2, wherein the cutting edge lies substantially in a plane arranged normal to the longitudinal axis of the main body.

4. The anchor assembly as claimed in claim 2, wherein the cutting member comprises front and rear faces which converge away from the front portion to define the cutting edge.

5. The anchor assembly as claimed in claim 1, wherein the cutting member defines at least one cutting point.

6. The anchor assembly as claimed in any preceding claim, wherein the at least one axial slit has a closed end defined by an enlarged aperture.

7. The anchor assembly as claimed in claim 6, wherein the or each enlarged head is arranged substantially on the interface between the front and rear portions of the main body.

8. The anchor assembly as claimed in any preceding claim, wherein between three and eight slits are arranged around the front portion of the main body.

9. The anchor assembly as claimed in claim 8, wherein four slits are equi-spaced around the front portion of the main body

10. The anchor assembly as claimed in any preceding claim, wherein a support flange is provided at least partway around the rear end of the rear portion and configured to flare outwardly.

11. The anchor assembly as claimed in any preceding claim, wherein the front section of the bore has a first part distal from the front end and tapering at a first angle relative to the longitudinal axis of the anchor body, and a second part proximal to the front end and tapering at a second angle relative to the longitudinal axis of the anchor body.

12. The anchor assembly as claimed in claim 11, wherein the first angle is greater than the second angle.

13. The anchor assembly as claimed in claim 11 or claim 12, wherein the second part has a length relative to the longitudinal axis which is between 5% and 50% of the combined lengths of the first and second parts.

14. The anchor assembly as claimed in any preceding claim, wherein the plug has front and rear ends and tapers at an angle between 0 and 5 degrees towards the front end.

15. The anchor assembly as claimed in claim 14 when dependent on claim 13, wherein the anchor assembly has a an expansion diameter defined by the sum of: (i) the diameter of the small front end of the plug; and (ii) the diameter of the front portion of the main body proximal the front end, wherein the expansion diameter is greater than the diameter of the rear portion of the main body.

16. The anchor assembly as claimed in any preceding claim, wherein the front portion of the main body tapers at an angle of between 4 to 12 degrees relative to the longitudinal axis.
